# EUROPEAN PATENT APPLICATION

(11) **EP 4 155 545 A1**
(43) Date of publication of application: **29.03.2023**
(21) Application number: 22197142.7
(22) Date of filing: 22.09.2022
(51) Int. Cl.: F04C 18/12, F04C 29/00, F01C 21/02, F04C 27/00

(54) **ROOTS BLOWER**

(30) Priority: 27.09.2021 JP 2021156547
(71) Applicant: Ogura Clutch Co., Ltd., Kiryu-shi, Gunma 376-0011 (JP)
(72) Inventor: YAGI, Tatsuya, Kiryu-shi, 376-0011 (JP); HOSHINO, Keisuke, Kiryu-shi, 376-0011 (JP); HIRATSUKA, Koki, Kiryu-shi, 376-0011 (JP)
(74) Representative: Samson & Partner Patentanwälte mbB

(57) **Abstract**

A roots blower includes driving (35) and driven (36) rotors that rotate while intermeshing with each other, driving (17) and driven (32) shafts fixed at the shaft centers of the driving and driven rotors, respectively, a driving gear (64) attached to the end of the driving shaft, a driven gear (65) that is attached to the end of the driven shaft and intermeshes with the driving gear, a rotor chamber (34) that houses the driving and driven rotors, a gear chamber (63) that houses the driving and driven gears, and driving (21, 22) and driven (31, 33) bearings that rotatably support the driving and driven shafts, respectively. The driving and driven gears are lubricated by a grease.

## Description

### Incorporation by Reference

This application claims the benefit of foreign priority to Japanese Patent Application No. 2021-156547, filed September 27, 2021, which is incorporated by reference in its entirety.

### Background of the Invention

The present invention relates to a roots blower in which a pair of rotors intermeshing with each other are coupled by a gear coupling structure so as to interlock with each other.

Japanese Utility Model Publication No. 4-10396 (literature 1) discloses an example of a roots blower of this type. This roots blower adopts a gear coupling structure to synchronously rotate driving and driven rotors intermeshing with each other. The gear coupling structure includes a driving gear attached to one end of the rotating shaft of the driving rotor, and a driven gear attached to one end of the rotating shaft of the driven rotor so as to intermesh with the driving gear.

The driving and driven gears are housed in a gear chamber and lubricated by oil stored in the gear chamber.

The gear chamber is formed by the side wall of a rotor housing that houses the driving and driven rotors, and a gear cover attached to the side wall. The gear cover is formed into an almost cup shape that projects from the side wall of the rotor housing and covers the driving and driven gears.

Oil seals are provided on the side wall of the rotor housing to prevent entrance of oil from the gear chamber to the rotor housing. The oil seals are provided between the rotating shaft of the driving rotor and the side wall of the rotor housing and between the rotating shaft of the driven rotor and the side wall of the rotor housing, and has a lip in sliding contact with the outer surface of the rotating shaft.

The roots blower disclosed in literature 1 has the following three problems caused by the oil seals provided between the rotating shafts and the side wall of the rotor housing. First, cost reduction by decreasing the number of parts has limitations. Second, power is lost at the sliding contact portions between the oil seals and the rotating shafts. Third, the oil seal is a consumable that deteriorates, and cannot implement a highly durable long-life roots blower.

### Summary of the Invention

It is an object of the present invention to provide a roots blower capable of implementing low cost, high operating efficiency, and long service life by using no oil seal.

According to one aspect of the present invention, there is provided a roots blower comprising a driving rotor and a driven rotor configured to rotate while intermeshing with each other, a driving shaft that is fixed at a shaft center of the driving rotor and includes a first end and a second end, a driving force being applied to the first end, a driven shaft that is fixed at a shaft center of the driven rotor and includes a third end and a fourth end, a driving gear attached to the second end of the driving shaft, a driven gear that is attached to the fourth end of the driven shaft and configured to intermesh with the driving gear, a housing including a rotor chamber configured to house the driving rotor and the driven rotor, and a gear chamber configured to house the driving gear and the driven gear, a driving bearing that is provided in the housing and configured to rotatably support the driving shaft, and a driven bearing that is provided in the housing and configured to rotatably support the driven shaft, wherein the driving gear and the driven gear are lubricated by a grease.

### Brief Description of the Drawings

Fig. 1 is a perspective view of a roots blower according to an embodiment of the present invention;
Fig. 2 is a longitudinal sectional view of the roots blower;
Fig. 3 is a sectional view of part of the first side wall of a housing;
Fig. 4 is a sectional view of part of the second side wall of the housing;
Fig. 5 is an exploded perspective view of a front housing and a center housing;
Fig. 6 is a perspective sectional view of rotors of the roots blower;
Fig. 7 is an exploded perspective view of the back part of the roots blower;
Fig. 8 is a rear view showing the inside of a rear housing;
Fig. 9 is an enlarged sectional view showing the intermeshing portion of driving and driven gears;
Fig. 10 is a sectional view showing a modification of a gear chamber;
Fig. 11 is an exploded perspective view of a rear housing and a gear cover;
Fig. 12 is a rear view of the rear housing and the gear cover when viewed from the back of the roots blower;
Fig. 13 is a sectional view showing a modification of the gear chamber;
Fig. 14 is an exploded perspective view of the rear housing and the gear cover; and
Fig. 15 is a rear view of the rear housing and the gear cover when viewed from the back of the roots blower.

### Description of the Preferred Embodiments

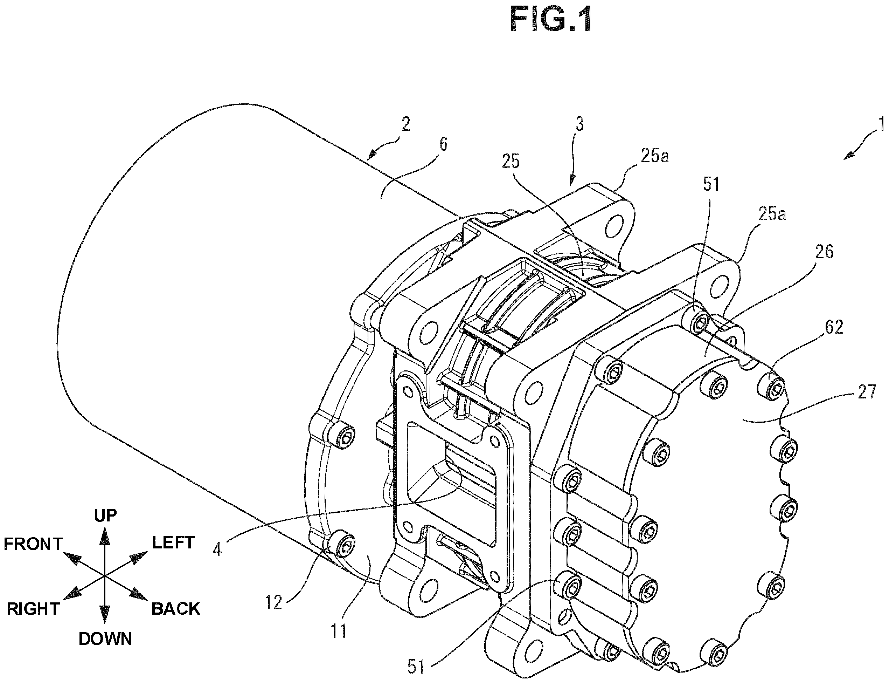

An embodiment of the present invention will be described in detail below with reference to Figs. 1 to 9.

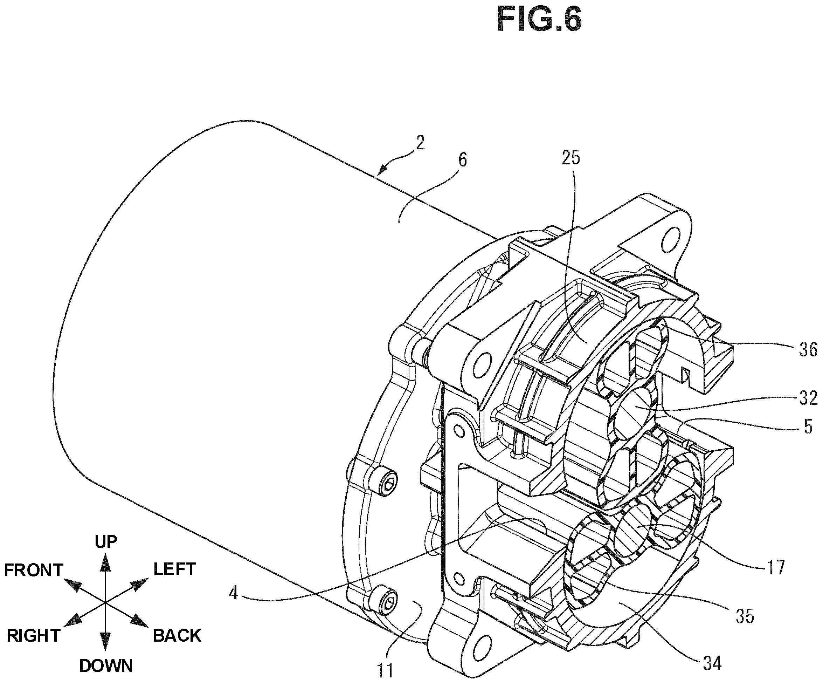

A roots blower 1 shown in Fig. 1 is a hydrogen circulation roots blower used to circulate hydrogen in a fuel cell system (not shown). The roots blower 1 is driven to operate by a motor 2 illustrated on the leftmost side in Fig. 1, sucks hydrogen from an inlet port 4 of a housing 3 (to be described later), and discharges it from an outlet port 5 (see Fig. 6). To explain a part of the roots blower 1, a direction will be referred to based on a direction viewed from the front of the roots blower 1 such that a direction in which the motor 2 is positioned with respect to the housing 3 is defined as the front, a direction in which the inlet port 4 is positioned is defined as the right side, and a direction in which the outlet port 5 is positioned is defined as the left side.

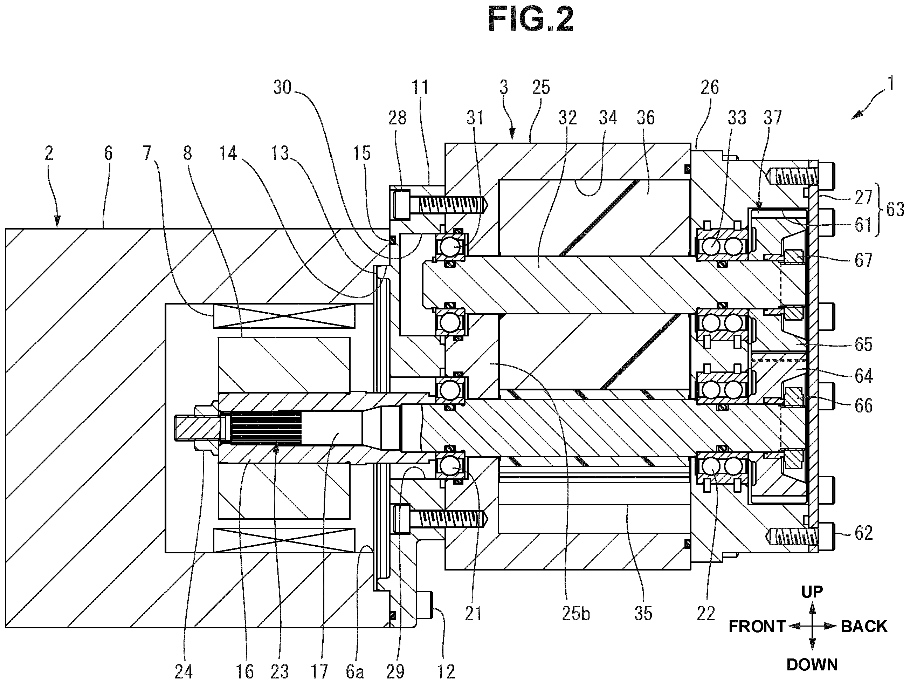

As shown in Fig. 2, the motor 2 includes a bottomed cylindrical motor case 6, a stator 7 provided on the inner wall surface of the motor case 6, and a rotator 8 provided at the shaft center of the motor case 6.

The motor case 6 has an opening 6a continuous with the inner wall surface. A first circular recess 14 is formed at the opening 6a. The motor case 6 is fixed to a front housing 11 by a plurality of mounting bolts 12 (see Fig. 1) in a state in which the opening 6a is closed by the front housing 11 serving as the front wall of the housing 3. As will be described later, the front housing 11 constitutes the first side wall of the housing 3, so the motor 2 is attached to the first side wall of the housing 3. As shown in Fig. 2, the motor case 6 is positioned with respect to the front housing 11 by fitting, in the first circular recess 14, a cylindrical projection 13 provided on the front surface of the front housing 11.

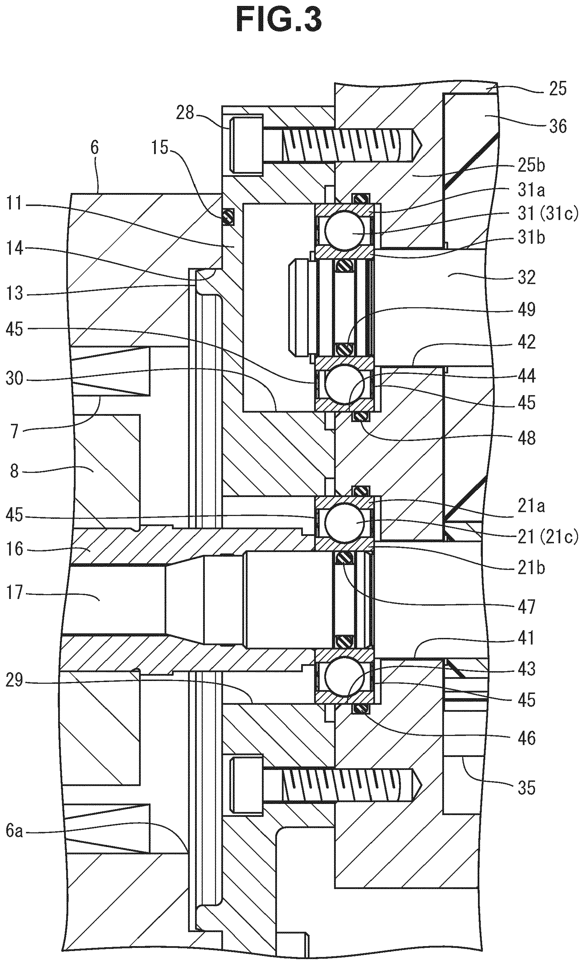

As shown in Figs. 2 and 3, a seal member 15 formed from an O-ring is provided between the opening 6a of the motor case 6 and the front housing 11. The seal member 15 seals the interval between the opening 6a and the front housing 11.

As shown in Fig. 2, the rotator 8 includes a cylindrical tubular shaft 16 at the shaft center, and is coupled to a driving shaft 17 via the tubular shaft 16. The driving shaft 17 is arranged at the lower portion of the housing 3 in a state in which the driving shaft 17 extends in the front-and-back direction. The driving shaft 17 is rotatably supported by a first bearing 21 and a second bearing 22 at the front and back portions of the housing 3. In the embodiment, the first bearing 21 and the second bearing 22 constitute a driving bearing that is provided in the housing 3 and configured to rotatably support the driving shaft 17.

The tubular shaft 16 is fixed by a fixing nut 24 in a state in which the tubular shaft 16 is coupled to the front end (first end) of the driving shaft 17 via a spline fitting portion 23. The above-described cylindrical projection 13 and first circular recess 14 are formed on the same axis as that of the driving shaft 17.

The housing 3 is formed from a combination of parts. These parts include the above-described front housing 11, a center housing 25 connected to the back end of the front housing 11, a rear housing 26 connected to the back end of the center housing 25, and a gear cover 27 connected to the back end of the rear housing 26. The front housing 11, the center housing 25, and the rear housing 26 are formed into predetermined shapes by casting, machining, or the like using an aluminum alloy as a material. The gear cover 27 is formed from a flat plate of an aluminum alloy.

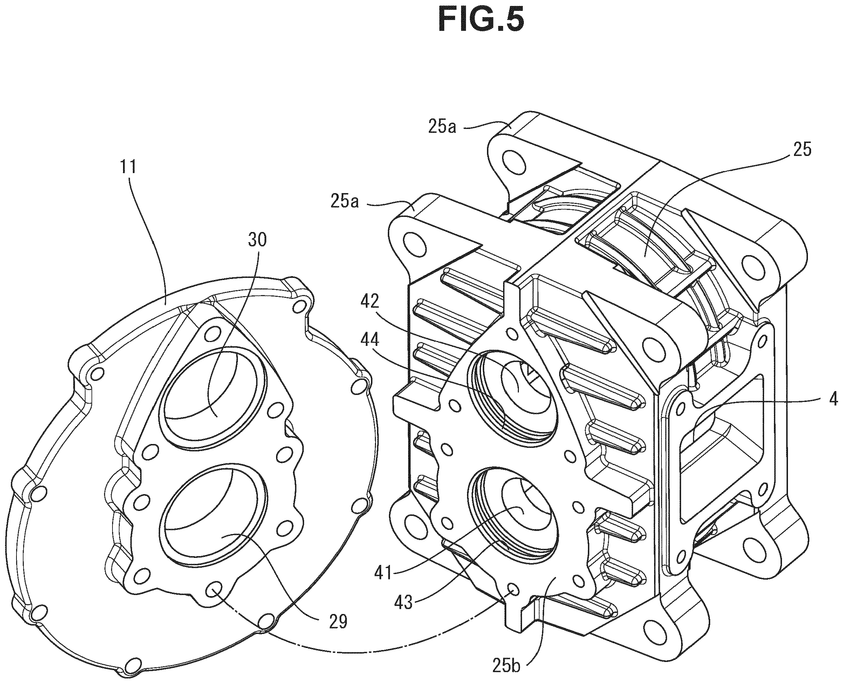

The front housing 11 is formed into an almost plate shape, and attached to the front end of the center housing 25 by a plurality of mounting bolts 28. As shown in Figs. 2 and 5, a through hole 29 is formed at the lower portion of the front housing 11, and a second circular recess 30 is formed at the upper portion.

As shown in Fig. 3, the tubular shaft 16 and the driving shaft 17 pass through the through hole 29. An outer ring 21a of the first bearing 21 supporting the front side of the driving shaft 17 is fitted in the through hole 29.

An outer ring 31a of a third bearing 31 provided above the first bearing 21 is fitted in the second circular recess 30. The third bearing 31 supports the front end (third end) of a driven shaft 32 positioned above the driving shaft 17. The driven shaft 32 is arranged at the upper portion of the housing 3 in a state in which the driven shaft 32 extends in the front-and-back direction. The driven shaft 32 is rotatably supported by the third bearing 31 and a fourth bearing 33 (see Fig. 2) at the front and back portions of the housing 3. In the embodiment, the third bearing 31 and the fourth bearing 33 constitute a driven bearing that is provided in the housing 3 and configured to rotatably support the driven shaft 32.

As shown in Fig. 1, the center housing 25 includes mounting flanges 25a at both the front and back ends. Support brackets (not shown) are attached to the mounting flanges 25a. The roots blower 1 is supported by, for example, the frame of a fuel cell system (not shown) via the support brackets. The above-mentioned inlet port 4 is formed on the right side at the center of the center housing 25 in the front-and-back direction, and the outlet port 5 (see Fig. 6) is formed on the left side at the center of the center housing 25 in the front-and-back direction.

As shown in Fig. 2, the center housing 25 is formed into a bottomed cylindrical shape that is open backward. The opening of the center housing 25 is closed by the rear housing 26. The rear housing 26 is connected to the center housing 25, forming a rotor chamber 34 inside the center housing 25. As shown in Fig. 6, the rotor chamber 34 is formed into an oval shape whose sectional shape is long in the up-and-down direction. The inlet port 4 is open on the right side of the rotor chamber 34, and the outlet port 5 is open on the left side of the rotor chamber 34.

The rotor chamber 34 houses a driving rotor 35 and driven rotor 36 that rotate while intermeshing with each other. Each of the driving rotor 35 and the driven rotor 36 is formed from a plastic material in a shape whose sectional shape is an almost cocoon. While intermeshing with each other, the driving rotor 35 and the driven rotor 36 rotate in the rotor chamber 34, sucking outside air (hydrogen in the embodiment) from the inlet port 4 into the rotor chamber 34 and discharging it from the outlet port 5 through an interval between the driving rotor 35 and driven rotor 36 and the inner wall of the rotor chamber 34.

The driving shaft 17 is fixed at the shaft center of the driving rotor 35 by insert molding. The driven shaft 32 is fixed at the shaft center of the driven rotor 36 by insert molding. Although not shown, twill knurling is performed on the outer surface of the driving shaft 17 that is adhered to the driving rotor 35, and the outer surface of the driven shaft 32 that is adhered to the driven rotor 36.

When the driving shaft 17 rotates, the driving rotor 35 rotates together with the driving shaft 17. When the driven shaft 32 rotates, the driven rotor 36 rotates together with the driven shaft 32. As shown in Fig. 2, the driving shaft 17 and the driven shaft 32 are connected to each other via a gear coupling structure 37 (to be described later) at the back end, and rotate at the same rotational speed in opposite rotational directions.

As a plastic material forming the driving rotor 35 and the driven rotor 36, for example, PES (Poly Ether Sulfone) is available. The coefficient of linear expansion of PES is equal to that of the aluminum alloy forming the center housing 25. By forming the driving rotor 35 and the driven rotor 36 from PES, they thermally expand similarly to the center housing 25. The clearance between the driving rotor 35 and driven rotor 36 and the center housing 25 can be kept constant while hardly influenced by the temperature of hydrogen and the outside air temperature.

As shown in Fig. 3, a first shaft hole 41 through which the driving shaft 17 passes, and a second shaft hole 42 through which the driven shaft 32 passes are formed in the front wall 25b of the center housing 25. The above-described front housing 11 is so attached as to overlap the front surface of the front wall 25b.

As shown in Figs. 3 and 5, a third circular recess (hole) 43 is formed at a portion of the front of the front wall 25b through which the driving shaft 17 passes. The third circular recess 43 has the same diameter as that of the through hole 29 of the front housing 11, and makes the through hole 29 and the first shaft hole 41 communicate with each other. The first bearing 21 is mounted and fitted in the through hole 29 and the third circular recess 43.

A fourth circular recess (hole) 44 is formed at a portion of the front of the front wall 25b through which the driven shaft 32 passes. The fourth circular recess 44 has the same diameter as that of the second circular recess 30 of the front housing 11, and makes the second circular recess 30 and the second shaft hole 42 communicate with each other. The third bearing 31 is mounted and fitted in the second circular recess 30 and the fourth circular recess 44.

The first bearing 21 and the third bearing 31 are hydrogen-compatible bearings in which the outer rings 21a and 31a, inner rings 21b and 31b, and balls 21c and 31c are formed from a high-chrome material. The high-chrome material is a material that prevents entrance of hydrogen into bearing steel forming the outer rings 21a and 31a, the inner rings 21b and 31b, and the balls 21c and 31c. The first bearing 21 and the third bearing 31 include, at their two ends, second seal members 45 that seal the insides of the bearings, and also include a creep preventing mechanism (not shown).

A first O-ring 46 is provided between the outer ring 21a of the first bearing 21 and the peripheral wall of the third circular recess 43, and a second O-ring 47 is provided between the inner ring 21b of the first bearing 21 and the driving shaft 17. A third O-ring 48 is provided between the outer ring 31a of the third bearing 31 and the peripheral wall of the fourth circular recess 44, and a fourth O-ring 49 is provided between the inner ring 31b of the third bearing 31 and the driven shaft 32.

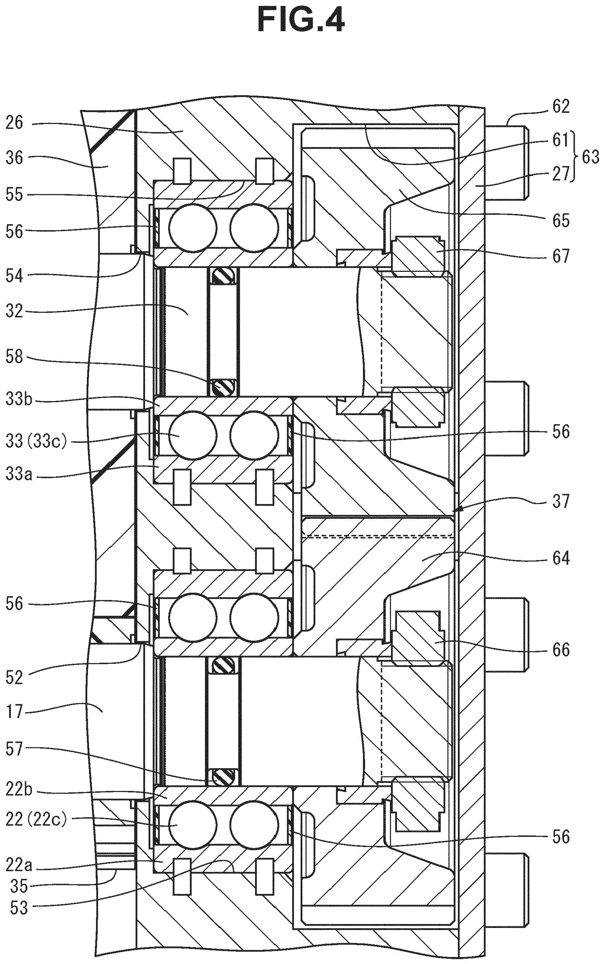

The rear housing 26 is attached to the center housing 25 by a plurality of mounting bolts 51 (see Fig. 1) in a state in which it is superimposed on the back end of the center housing 25 and closes the opening of the rotor chamber 34. As shown in Fig. 4, a first through hole 52 and fifth circular recess (hole) 53 through which the driving shaft 17 passes, and a second through hole 54 and sixth circular recess (hole) 55 through which the driven shaft 32 passes are formed at the front of the rear housing 26. The first through hole 52 is open at the bottom of the fifth circular recess 53, and the second bearing 22 rotatably supporting the back of the driving shaft 17 is mounted in the fifth circular recess 53. The second through hole 54 is open at the bottom of the sixth circular recess 55, and the fourth bearing 33 rotatably supporting the back of the driven shaft 32 is mounted in the sixth circular recess 55.

The second bearing 22 and the fourth bearing 33 are double row ball bearings, and are hydrogen-compatible bearings in which bearing steels that form outer rings 22a and 33a, inner rings 22b and 33b, and balls 22c and 33c are formed from a high-chrome material, similar to the first and third bearings 21 and 31. The second bearing 22 and the fourth bearing 33 include, at their two ends, first seal members 56 that seal the insides of the bearings, and also include a creep preventing mechanism (not shown). A fifth O-ring 57 is provided between the inner ring 22b of the second bearing 22 and the driving shaft 17, and a sixth O-ring 58 is provided between the inner ring 33b of the fourth bearing 33 and the driven shaft 32.

So-called contact seals are used for the first seal members 56 provided on the second bearing 22 and the fourth bearing 33, and the second seal members 45 of the first bearing 21 and third bearings 31 described above. The contact seal has sealing characteristics. Hence, no lubricant such as grease passes through the first, second, third, and fourth bearings 21, 22, 31, and 33 in the axial direction. From the viewpoint of leakage prevention of the lubricant, an effect can be obtained even if the second seal members 45 are omitted as long as the first seal members 56 are provided.

In the embodiment, the front housing 11 and the front wall 25b of the center housing 25 constitute the first side wall of the housing 3, and the rear housing 26 constitutes the second side wall of the housing 3. The first and second side walls are spaced apart in the axial direction of the driving shaft 17 and driven shaft 32, and arranged to sandwich the rotor chamber 34. The driving shaft 17 is rotatably supported on the first and second side walls by the first bearing 21 provided on the first side wall and the second bearing 22 provided on the second side wall. The driven shaft 32 is rotatably supported on the first and second side walls by the third bearing 31 provided on the first side wall and the fourth bearing 33 provided on the second side wall.

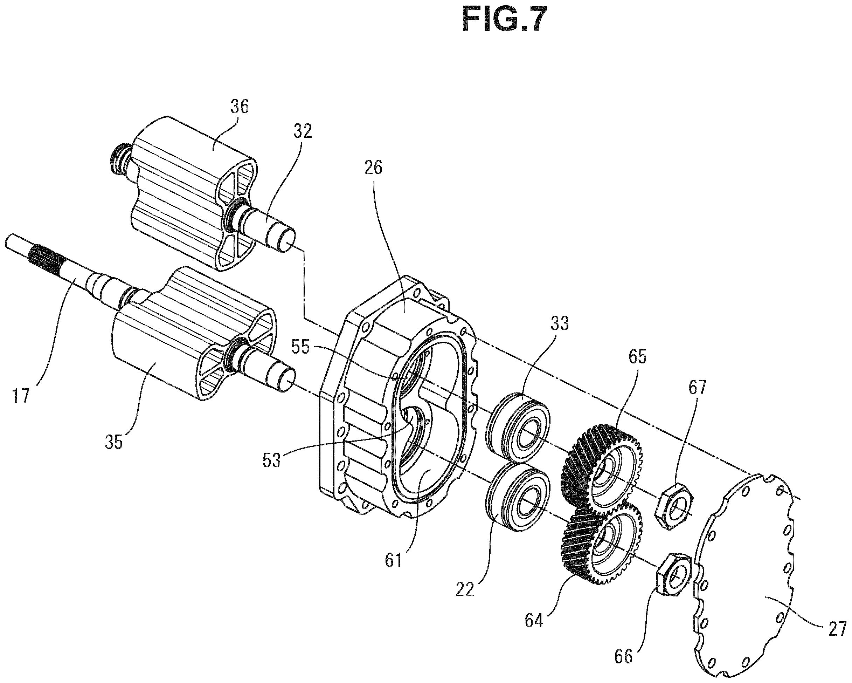

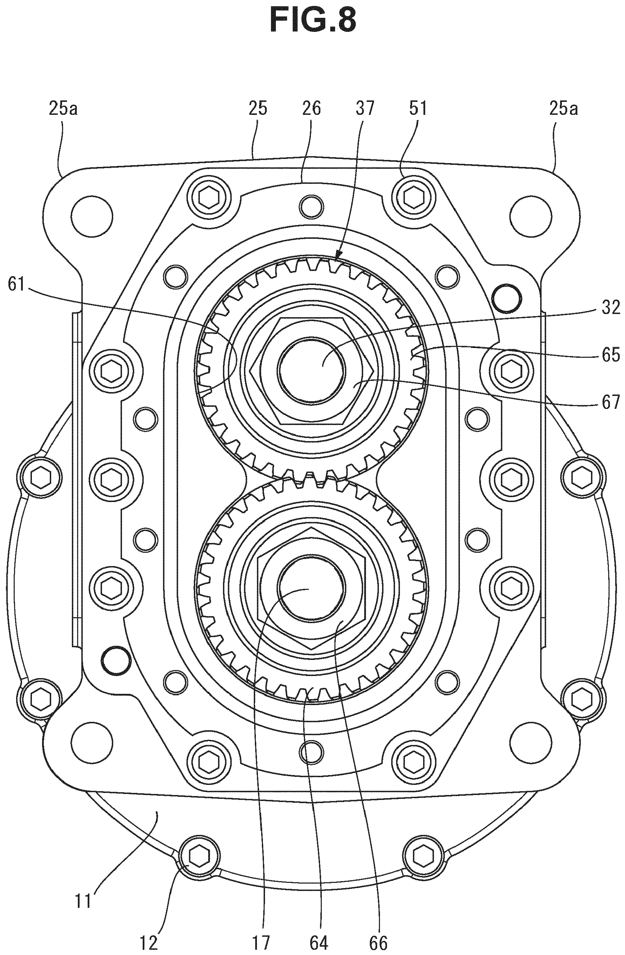

A recess 61 communicating with the openings of the fifth circular recess 53 and sixth circular recess 55 is formed at the back of the rear housing 26. As shown in Figs. 7 and 8, the recess 61 has an opening shape that is an oval long in the up-and-down direction and is constricted at the center in the up-and-down direction. The opening of the recess 61 is closed by the gear cover 27. The gear cover 27 is attached to the rear housing 26 by a plurality of mounting bolts 62 (see Fig. 1).

As shown in Fig. 4, the opening of the recess 61 is closed by the gear cover 27, forming a gear chamber 63 in the rear housing 26. As shown in Fig. 2, the gear chamber 63 is formed outside the rotor chamber 34 in the axial direction of the driving rotor 35 and driven rotor 36 in the housing 3, specifically behind the rotor chamber 34. The gear chamber 63 is formed to be a closed space by the rear housing 26, and the gear cover 27 attached to the rear housing 26.

A shape of the gear chamber 63 when viewed in the axial direction of the driving shaft 17 and driven shaft 32 is a cocoon shape. That is, the inner peripheral wall (wall extending in the axial direction of the driving shaft 17 and driven shaft 32) of the gear chamber 63 is formed into a shape conforming, with a gap, to the loci of the outer surfaces of a driving gear 64 and driven gear 65 when the driving gear 64 and the driven gear 65 rotate. The driving shaft 17 and the driven shaft 32 extend from the rotor chamber 34 to the gear chamber 63.

The gear chamber 63 houses the driving gear 64 and driven gear 65 that constitute the gear coupling structure 37. The driving gear 64 is attached to the back end (second end) of the driving shaft 17, and is fixed to the driving shaft 17 by a first fixing nut 66 together with the inner ring 22b of the second bearing 22. The driven gear 65 is attached to the back end (fourth end) of the driven shaft 32 in a state in which the driven gear 65 intermeshes with the driving gear 64, and is fixed to the driven shaft 32 by a second fixing nut 67 together with the inner ring 33b of the fourth bearing 33.

As shown in Fig. 7, the driving gear 64 and the driven gear 65 according to the embodiment are constituted by helical gears. Note that the teeth of the driving gear 64 and driven gear 65 are illustrated as the teeth of a general spur gear in Figs. 2 and 4 for easy understanding of the driving gear 64 and driven gear 65.

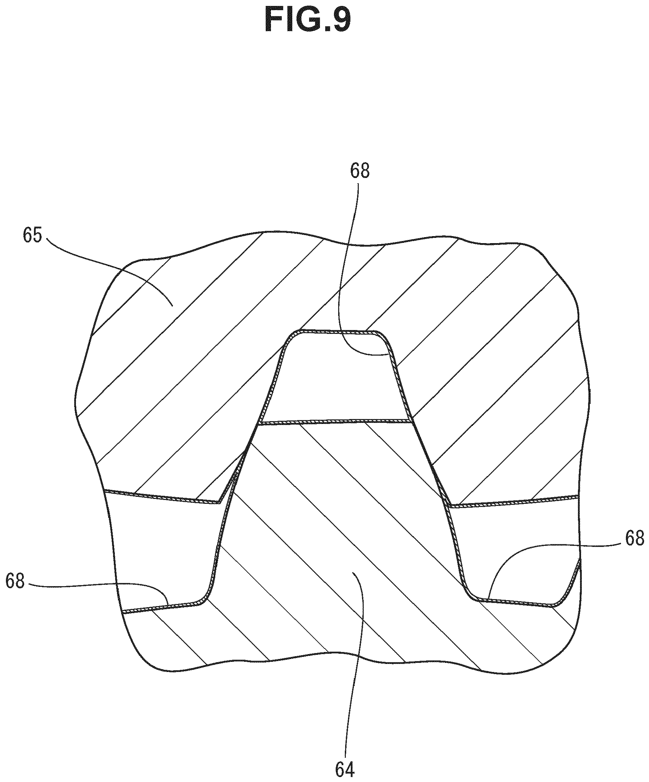

The driving gear 64 is formed from hardened steel, nickel-chromium steel, or the like. The driven gear 65 is formed from cast iron. As shown in Fig. 9, the driving gear 64 and the driven gear 65 are lubricated by a grease 68. An example of the grease 68 is an organomolybdenum-based one. Fig. 9 shows the grease 68 thicker than an actual one.

The driving gear 64 and the driven gear 65 are lubricated by the grease 68 by applying the grease 68 to the driving gear 64 and the driven gear 65, as shown in Fig. 9, or by filling the gear chamber 63 with the grease 68 (not shown). When the grease 68 is applied, the roots blower 1 excellent in low-temperature mobility can be implemented. To the contrary, when the gear chamber 63 is filled with the grease 68, the grease 68 is always present on the tooth surface and hardly causes oil film shortage, improving the lubricity and prolonging the service life.

In the embodiment, the second and fourth bearings 22 and 33 having sealing characteristics are provided between the gear chamber 63 and the rotor chamber 34. This structure can prevent leakage of the grease 68 from the gear chamber 63 into the rotor chamber 34 without installing a seal member such as an oil seal between the gear chamber 63 and the rotor chamber 34.

In the roots blower 1 having this structure, the rotator 8 of the motor 2 rotates to apply a driving force from the motor 2 to an end (front end) of the driving shaft 17 opposite to the gear chamber 63. Then, the driving shaft 17 and driving rotor 35, and the driven shaft 32 and driven rotor 36 rotate at the same rotational speed in opposite directions. The driving rotor 35 and the driven rotor 36 rotate in this way, sucking hydrogen from the inlet port 4 and discharging it from the outlet port 5.

In the roots blower 1, the driving gear 64 and driven gear 65 that couple the driving shaft 17 and the driven shaft 32 are lubricated by the grease 68. No oil seal is necessary between the rotor chamber 34 and the gear chamber 63, unlike a conventional roots blower in which oil is stored in a gear chamber. Thus, the number of parts can be decreased, implementing cost reduction. When the driving shaft 17 and the driven shaft 32 rotate, no power is lost by friction against an oil seal, and the operating efficiency can be increased. An oil seal serving as a consumable is not provided, so the service life can be prolonged. Since the gear coupling portion is lubricated by the grease 68, low-temperature mobility, heat shock resistance, and vibration resistance can be improved.

In the roots blower 1, the gear chamber 63 is formed by the recess 61 of the rear housing 26, and the gear cover 27 covering the opening of the recess 61. The gear cover 27 can therefore be formed into a simple plate shape, and the shape of the gear cover 27 can be simplified. The gear cover 27 of this shape can be easily manufactured, reducing the cost.

According to the embodiment, a roots blower capable of implementing low cost, high operating efficiency, and long service life can be provided.

The motor 2 according to the embodiment includes the bottomed cylindrical motor case 6. The opening 6a of the motor case 6 is closed by the front housing 11. The interval between the opening 6a of the motor case 6 and the front housing 11 is sealed by the seal member 15. The motor 2 is thus integrated with the housing 3, and leakage of hydrogen outside from the motor 2 and the housing 3 can be prevented.

The first and second bearings 21 and 22 that support the driving shaft 17, and the third and fourth bearings 31 and 33 that support the driven shaft 32 according to the embodiment are hydrogen-compatible bearings formed from a high-chrome material that prevents entrance of hydrogen into bearing steel. In other words, each of the driving bearing and the driven bearing is a hydrogen-compatible bearing in which, as a bearing steel that forms each of the driving bearing and the driven bearing, a high-chrome material that prevents entrance of hydrogen into the bearing steel is used. The first, second, third, and fourth bearings 21, 22, 31, and 33 include the seal members 45 and 56 that seal the insides of the bearings.

More specifically, the first bearing 21 includes the outer ring 21a, the inner ring 21b, the ball 21c, and the second seal members 45. The outer ring 21a is fixed to the recess (the through hole 29 of the front housing 11 and the third circular recess 43 of the front wall 25b) of the first side wall through which the driving shaft 17 passes. The inner ring 21b is fixed to the driving shaft 17. The ball 21c is interposed between the outer ring 21a and the inner ring 21b. The second seal members 45 are arranged at two ends of a space formed between the outer ring 21a and the inner ring 21b in the axial direction of the driving shaft 17, and seal this space.

The second bearing 22 includes the outer ring 22a, the inner ring 22b, the ball 22c, and the first seal members 56. The outer ring 22a is fixed to the recess (the fifth circular recess 53 of the rear housing 26) of the second side wall through which the driving shaft 17 passes. The inner ring 22b is fixed to the driving shaft 17. The ball 22c is interposed between the outer ring 22a and the inner ring 22b. The first seal members 56 are arranged at two ends of a space formed between the outer ring 22a and the inner ring 22b in the axial direction of the driving shaft 17, and seal this space.

The third bearing 31 includes the outer ring 31a, the inner ring 31b, the ball 31c, and the second seal members 45. The outer ring 31a is fixed to the recess (the second circular recess 30 of the front housing 11 and the fourth circular recess 44 of the front wall 25b) of the first side wall through which the driven shaft 32 passes. The inner ring 31b is fixed to the driven shaft 32. The ball 31c is interposed between the outer ring 31a and the inner ring 31b. The second seal members 45 are arranged at two ends of a space formed between the outer ring 31a and the inner ring 31b in the axial direction of the driven shaft 32, and seal this space.

The fourth bearing 33 includes the outer ring 33a, the inner ring 33b, the ball 33c, and the first seal members 56. The outer ring 33a is fixed to the recess (the sixth circular recess 55 of the rear housing 26) of the second side wall through which the driven shaft 32 passes. The inner ring 33b is fixed to the driven shaft 32. The ball 33c is interposed between the outer ring 33a and the inner ring 33b. The first seal members 56 are arranged at two ends of a space formed between the outer ring 33a and the inner ring 33b in the axial direction of the driven shaft 32, and seal this space.

This arrangement can prevent generation of so-called "white peeling" on the rolling contact surfaces of the balls 21c, 22c, 31c, and 33c when the bearings are used in the hydrogen atmosphere. As a result, a roots blower capable of supplying hydrogen in a long period can be implemented.

The gear chamber 63 according to the embodiment is formed into a cocoon shape when viewed in the axial direction of the driving shaft 17. The inner peripheral wall (inner wall of the recess 61) of the gear chamber 63 that extends in the axial direction of the driving shaft 17 is formed into a shape conforming, with a gap, to the loci of the outer surfaces of the driving gear 64 and driven gear 65 when the driving gear 64 and the driven gear 65 rotate. In other words, the inner peripheral wall of the gear chamber 63 has a shape defined by a combination of the concentric circle of the locus of the outer surface of the driving gear 64 when the driving gear 64 rotates and that of the outer surface of the driven gear 65 when the driven gear 65 rotates. Even if the driving gear 64 and the driven gear 65 rotate at high speed and the grease 68 scatters, the grease 68 stays near the driving gear 64 and the driven gear 65. Excessive scattering of the grease 68 can be prevented, improving the lubricity.

### (Modification 1 of Gear Chamber)

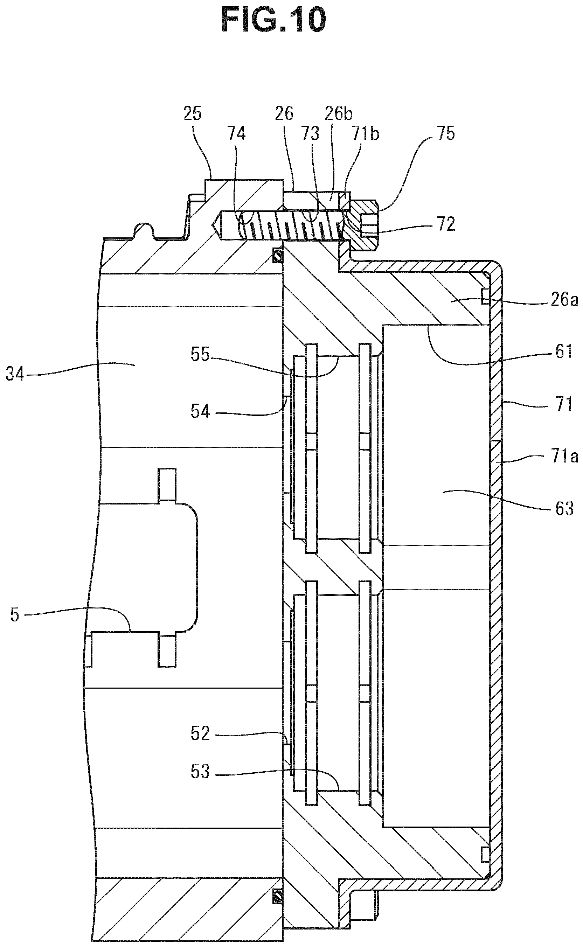

The gear chamber can be formed as shown in Figs. 10 to 12. In Figs. 10 to 12, the same reference numerals as those in Figs. 1 to 9 denote the same or similar parts, and a detailed description thereof will not be repeated.

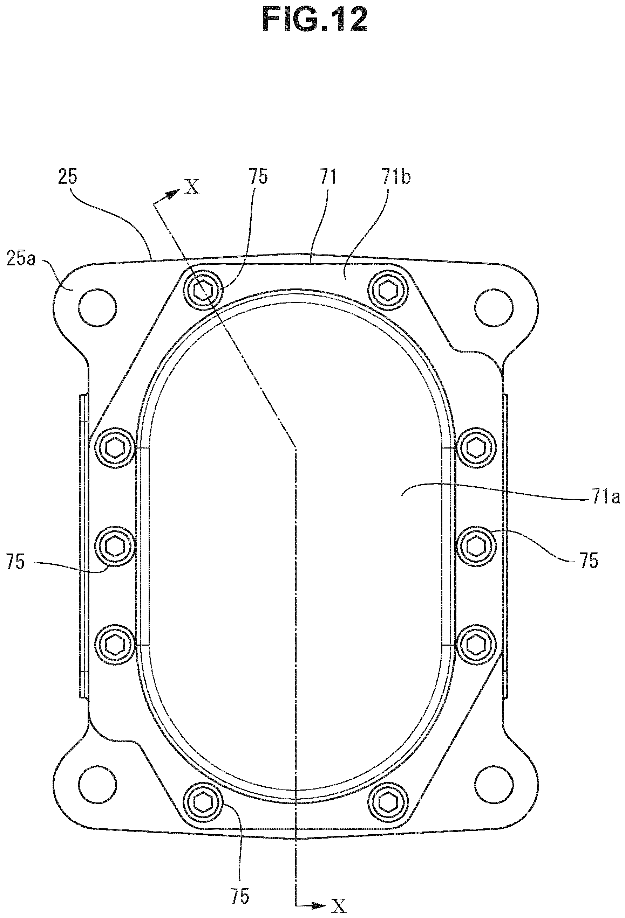

The gear chamber 63 shown in Fig. 10 is formed to be a closed space by the rear housing 26, and a gear cover 71 of a sheet metal attached to the rear housing 26 so as to close the recess 61 of the rear housing 26. Fig. 10 is a sectional view of the rear housing 26 and the gear cover 71 taken along a line X - X in Fig. 12.

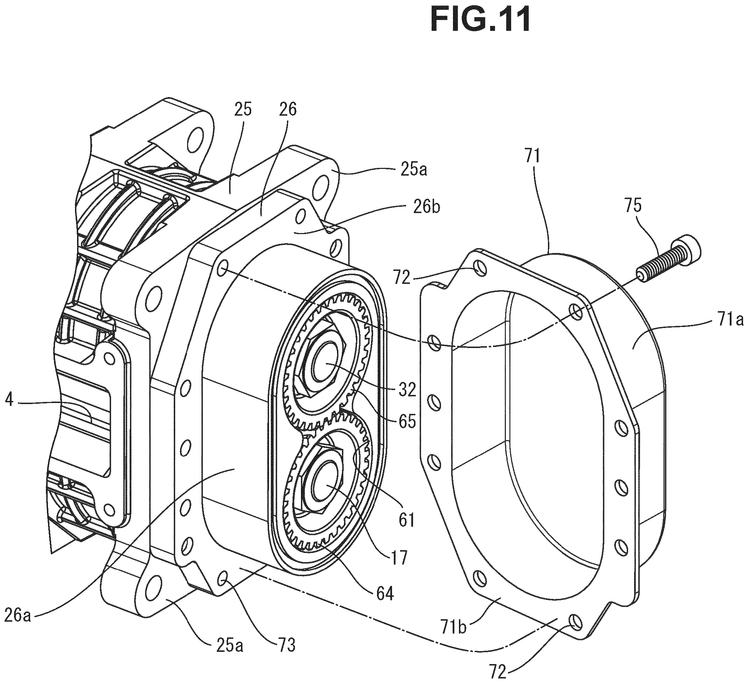

The gear cover 71 is obtained by molding a metal plate into a cup shape by pressure molding. As shown in Fig. 11, the gear cover 71 includes a cup-like main body 71a, and a flange 71b provided around the opening of the main body 71a. The main body 71a is so formed as to be fitted in a tubular portion 26a forming the recess 61 of the rear housing 26. The gear cover 71 is fitted in the tubular portion 26a, forming the gear chamber 63 between the rear housing 26 and the gear cover 71. The inner peripheral wall (inner wall of the recess 61) of the gear chamber 63 that extends in the axial direction of the driving shaft 17 is formed into a shape conforming to the loci of the outer surfaces of the driving gear 64 and driven gear 65 when the driving gear 64 and the driven gear 65 rotate with a gap.

The flange 71b is connected to the entire periphery of the main body 71a and has a plurality of through holes 72. The rear housing 26 has a flange 26b superimposed on the center housing 25. The flange 71b is formed to overlap the flange 26b of the rear housing 26.

The flange 26b of the rear housing 26 has a plurality of through holes 73. The through holes 73 and the through holes 72 of the gear cover 71 are formed at positions where they overlap each other when viewed in the axial direction of the driving shaft 17. As shown in Fig. 10, a plurality of threaded holes 74 are formed in the center housing 25 at positions corresponding to the through holes 72 and 73. The rear housing 26 and the gear cover 71 are attached to the center housing 25 by mounting bolts 75 that are screwed into the threaded holes 74 through the through holes 72 and 73.

### (Modification 2 of Gear Chamber)

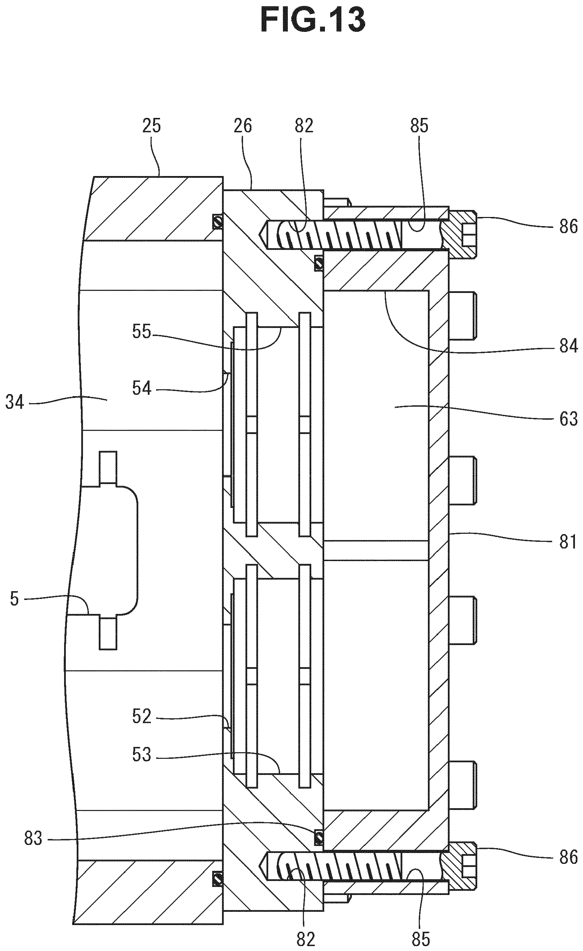

The gear chamber can be formed as shown in Figs. 13 to 15. In Figs. 13 to 15, the same reference numerals as those in Figs. 1 to 9 denote the same or similar parts, and a detailed description thereof will not be repeated.

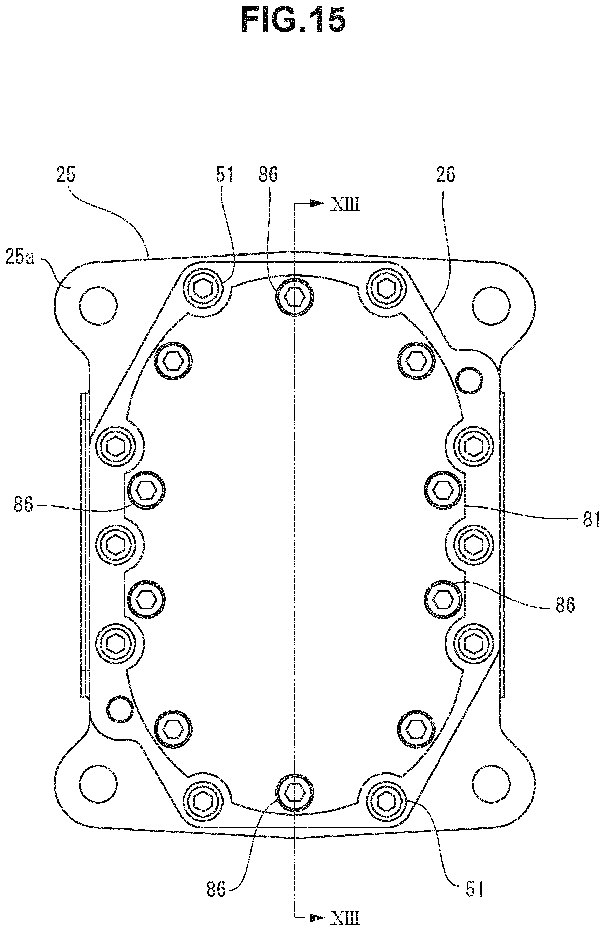

The gear chamber 63 shown in Fig. 13 is formed to be a closed space by the rear housing 26 formed into a plate shape, and a gear cover 81 superimposed on the back surface of the rear housing 26. Fig. 13 is a sectional view of the rear housing 26 and the gear cover 81 taken along a line XIII - XIII in Fig. 15.

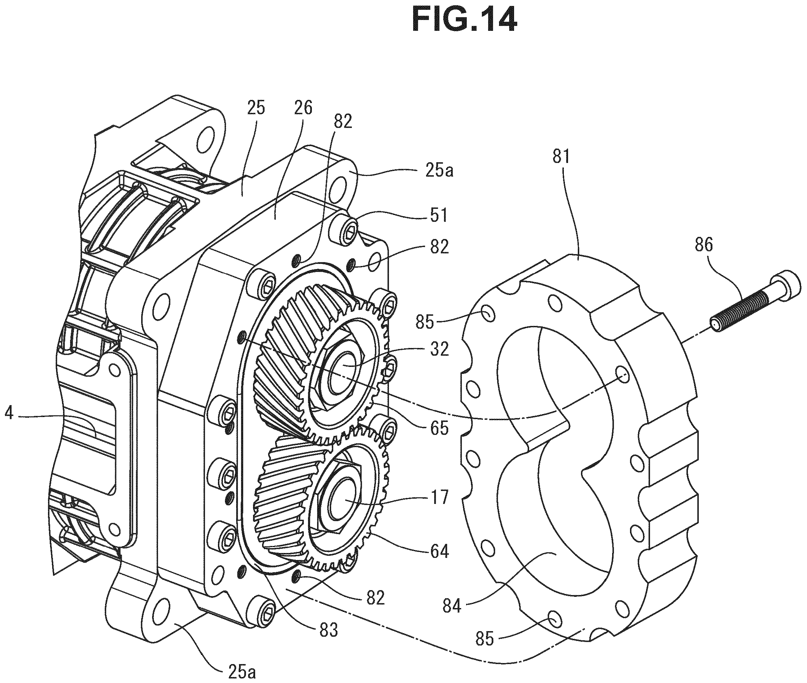

As shown in Fig. 14, the rear housing 26 shown in Fig. 13 is formed into such a plate shape as to expose the driving gear 64 and the driven gear 65, and is fixed to the center housing 25 by the mounting bolts 51. A plurality of threaded holes 82 and a seal member 83 are provided within a range surrounded by the mounting bolts 51 in the rear housing 26.

The gear cover 81 shown in Figs. 13 to 15 is formed into a cup shape by casting or machining. More specifically, as shown in Fig. 14, the gear cover 81 includes a recess 84 formed into a cocoon shape when viewed in the axial direction of the driving shaft 17, and a plurality of through holes 85 positioned outside the recess 84. The recess 84 is so formed as to be able to house the driving gear 64 and the driven gear 65. The gear cover 81 is superimposed on the rear housing 26 in a state in which the driving gear 64 and the driven gear 65 are inserted in the recess 84, thereby forming the gear chamber 63 between the rear housing 26 and the gear cover 81. The inner peripheral wall (inner wall of the recess 84) of the gear chamber 63 that extends in the axial direction of the driving shaft 17 is formed into a shape conforming to the loci of the outer surfaces of the driving gear 64 and driven gear 65 when the driving gear 64 and the driven gear 65 rotate with a gap.

The through holes 85 are formed at positions where they overlap the threaded holes 82 of the rear housing 26 when viewed in the axial direction of the driving shaft 17. As shown in Fig. 13, the gear cover 81 is attached to the rear housing 26 by screwing, into each threaded hole 82, a mounting bolt 86 passing through the through hole 85. In this attachment state, the seal member 83 is sandwiched between the rear housing 26 and the gear cover 81 and seals the interval between these members.

Even when the gear chamber 63 is formed as shown in Figs. 10 to 15, if the driving gear 64 and the driven gear 65 rotate at high speed and the grease 68 scatters, the grease 68 stays near the driving gear 64 and the driven gear 65. Excessive scattering of the grease 68 can be prevented, improving the lubricity.

Note that all the axial direction of the driving shaft 17, that of the driven shaft 32, that of the driving rotor 35, and that of the driven rotor 36 in the above description are directions parallel to each other.

### (Aspects of Present Invention)

According to one aspect of the present invention, there is provided a roots blower comprising a driving rotor and a driven rotor configured to rotate while intermeshing with each other, a driving shaft that is fixed at a shaft center of the driving rotor and includes a first end and a second end, a driven shaft that is fixed at a shaft center of the driven rotor and includes a third end and a fourth end, a driving gear attached to the second end of the driving shaft, a driven gear that is attached to the fourth end of the driven shaft and configured to intermesh with the driving gear, a housing including a rotor chamber configured to house the driving rotor and the driven rotor, and a gear chamber configured to house the driving gear and the driven gear, a driving bearing that is provided in the housing and configured to rotatably support the driving shaft, and a driven bearing that is provided in the housing and configured to rotatably support the driven shaft, wherein the driving gear and the driven gear are lubricated by a grease, and wherein a driving force is applied to the first end. Note that the first and second ends are two ends in the axial direction of the driving shaft. The third and fourth ends are two ends in the axial direction of the driven shaft.

According to one aspect of the present invention, no oil seal is necessary between the gear chamber and the rotor chamber, so low cost, high operating efficiency, and long service life can be implemented.

The housing may include a first side wall and a second side wall that are spaced apart in an axial direction of the driving shaft and the driven shaft and arranged to sandwich the rotor chamber. The housing may further include a cover attached to the second side wall. The gear chamber may be configured to be a closed space by the second side wall and the cover. The driving bearing may include a first bearing provided on the first side wall, and a second bearing provided on the second side wall. The driven bearing may include a third bearing provided on the first side wall, and a fourth bearing provided on the second side wall.

The above-described roots blower may further comprise a motor attached to the first side wall of the housing. The motor may include a motor case formed into a bottomed cylindrical shape including an opening closed by the first side wall, a stator provided on an inner wall surface of the motor case, a rotator that is provided at a shaft center of the motor case and coupled to the driving shaft, and a seal member configured to seal an interval between the opening of the motor case and the first side wall.

Each of the driving bearing and the driven bearing may be a hydrogen-compatible bearing in which, as a bearing steel that forms each of the driving bearing and the driven bearing, a high-chrome material that prevents entrance of hydrogen into the bearing steel is used. Each of the driving bearing and the driven bearing may include seal members configured to seal an inside of each of the driving bearing and the driven bearing.

Each of the second bearing and the fourth bearing may include an outer ring fixed to a recess (hole), in the second side wall, through which each of the driving shaft and the driven shaft passes, an inner ring fixed to each of the driving shaft and the driven shaft, a ball interposed between the outer ring and the inner ring, and first seal members that are arranged at two ends of a space formed between the outer ring and the inner ring in an axial direction of each of the driving shaft and the driven shaft, and are configured to seal the space.

Each of the first bearing and the third bearing may include an outer ring fixed to a recess (hole), in the first side wall, through which each of the driving shaft and the driven shaft passes, an inner ring fixed to each of the driving shaft and the driven shaft, a ball interposed between the outer ring and the inner ring, and second seal members that are arranged at two ends of a space formed between the outer ring and the inner ring in an axial direction of each of the driving shaft and the driven shaft, and are configured to seal the space.

The gear chamber may be formed into a cocoon shape when viewed in an axial direction of the driving shaft. The gear chamber may include an inner peripheral wall extending in the axial direction, and the inner peripheral wall may be formed into a shape conforming, with a gap, to loci of outer surfaces of the driving gear and the driven gear when the driving gear and the driven gear rotate. The gear chamber may include an inner peripheral wall extending in an axial direction of the driving shaft, and the inner peripheral wall may have a shape defined by a combination of a concentric circle of a locus of an outer surface of the driving gear when the driving gear rotates and a concentric circle of a locus of an outer surface of the driven gear when the driven gear rotates.

The gear chamber may be constituted by a recess formed in the second side wall, and the cover of a flat plate shape formed to cover an opening of the recess. The gear chamber may be constituted by a recess formed in the second side wall, and the cover of a cup shape attached to the second side wall so as to cover an opening of the recess. The gear chamber may be constituted by the second side wall of a flat plate shape, and the cover of a cup shape superimposed on the second side wall.

## Claims

1. A roots blower comprising:
a driving rotor (35) and a driven rotor (36) configured to rotate while intermeshing with each other;
a driving shaft (17) that is fixed at a shaft center of the driving rotor (35) and includes a first end and a second end, a driving force being applied to the first end;
a driven shaft (32) that is fixed at a shaft center of the driven rotor (36) and includes a third end and a fourth end;
a driving gear (64) attached to the second end of the driving shaft (17);
a driven gear (65) that is attached to the fourth end of the driven shaft (32) and configured to intermesh with the driving gear (64);
a housing (3) including a rotor chamber (34) configured to house the driving rotor (35) and the driven rotor (36), and a gear chamber (63) configured to house the driving gear (64) and the driven gear (65);
a driving bearing that is provided in the housing (3) and configured to rotatably support the driving shaft (17); and
a driven bearing that is provided in the housing (3) and configured to rotatably support the driven shaft (32),
wherein the driving gear (64) and the driven gear (65) are lubricated by a grease (68).

2. The blower according to claim 1, wherein the housing (3) includes a first side wall and a second side wall (26) that are spaced apart in an axial direction of the driving shaft (17) and the driven shaft (32) and arranged to sandwich the rotor chamber (34).

3. The blower according to claim 2, wherein
the housing (3) further includes a cover (27) attached to the second side wall (26), and
the gear chamber (63) is configured to be a closed space by the second side wall (26) and the cover (27) .

4. The blower according to claim 2 or 3, wherein
the driving bearing includes a first bearing (21) provided on the first side wall, and a second bearing (22) provided on the second side wall (26), and
the driven bearing includes a third bearing (31) provided on the first side wall, and a fourth bearing (33) provided on the second side wall (26).

5. The blower according to any one of claims 2 to 4, further comprising a motor (2) attached to the first side wall of the housing (3),
the motor (2) including:
a motor case (6) formed into a bottomed cylindrical shape including an opening (6a) closed by the first side wall;
a stator (7) provided on an inner wall surface of the motor case (6);
a rotator (8) that is provided at a shaft center of the motor case (6) and coupled to the driving shaft (17); and
a seal member (15) configured to seal an interval between the opening (6a) of the motor case (6) and the first side wall.

6. The blower according to any one of claims 1 to 5, wherein each of the driving bearing and the driven bearing is a hydrogen-compatible bearing in which, as a bearing steel that forms each of the driving bearing and the driven bearing, a high-chrome material that prevents entrance of hydrogen into the bearing steel is used, and
includes seal members (45, 56) configured to seal an inside of each of the driving bearing and the driven bearing.

7. The blower according to claim 4, wherein each of the second bearing (22) and the fourth bearing (33) includes:
an outer ring (22a, 33a) fixed to a recess (53, 55), in the second side wall (26), through which each of the driving shaft (17) and the driven shaft (32) passes;
an inner ring (22b, 33b) fixed to each of the driving shaft (17) and the driven shaft (32);
a ball (22c, 33c) interposed between the outer ring (22a, 33a) and the inner ring (22b, 33b); and
first seal members (56) that are arranged at two ends of a space formed between the outer ring (22a, 33a) and the inner ring (22b, 33b) in an axial direction of each of the driving shaft (17) and the driven shaft (32), and are configured to seal the space.

8. The blower according to claim 7, wherein each of the first bearing (21) and the third bearing (31) includes:
an outer ring (21a, 31a) fixed to a recess (43, 44), in the first side wall, through which each of the driving shaft (17) and the driven shaft (32) passes;
an inner ring (21b, 31b) fixed to each of the driving shaft (17) and the driven shaft (32);
a ball (21c, 31c) interposed between the outer ring (21a, 31a) and the inner ring (21b, 31b); and
second seal members (45) that are arranged at two ends of a space formed between the outer ring (21a, 31a) and the inner ring (21b, 31b) in an axial direction of each of the driving shaft (17) and the driven shaft (32), and are configured to seal the space.

9. The blower according to any one of claims 1 to 8, wherein
the gear chamber (63) is formed into a cocoon shape when viewed in an axial direction of the driving shaft (17),
the gear chamber (63) includes an inner peripheral wall extending in the axial direction, and
the inner peripheral wall is formed into a shape conforming, with a gap, to loci of outer surfaces of the driving gear (64) and the driven gear (65) when the driving gear (64) and the driven gear (65) rotate.

10. The blower according to any one of claims 1 to 8, wherein
the gear chamber (63) includes an inner peripheral wall extending in an axial direction of the driving shaft (17), and
the inner peripheral wall has a shape defined by a combination of a concentric circle of a locus of an outer surface of the driving gear (64) when the driving gear (64) rotates and a concentric circle of a locus of an outer surface of the driven gear (65) when the driven gear (65) rotates.
